# EUROPEAN PATENT SPECIFICATION

(11) **EP 2 192 312 B1**
(45) Date of publication and mention of the grant of the patent: **24.04.2013**
(21) Application number: 09156067.2
(22) Date of filing: 24.03.2009
(51) Int. Cl.: F16C 11/06

(54) **A coupling bearing**
Kupplungslager
Palier d'attelage

(30) Priority: 26.11.2008 EP 08170032
(43) Date of publication of application: 02.06.2010
(73) Proprietor: Minebea Co. Ltd., Kitasaku-gun, Nagano 389-0293 (JP)
(72) Inventor: Shore, David Michael, Dunholme Nottinghamshire LN2 3QU (GB); Clarke, Allen Christopher, Newark Nottinghamshire NG24 1SF (GB)
(74) Representative: Hoarton, Lloyd Douglas Charles

(56) References cited:
- WO-A1-2008/017095
- DE-A1- 3 419 776
- DE-A1- 10 139 970
- US-A- 4 986 688

## Description

THE PRESENT INVENTION relates to a thrust bearing and more particularly to a thrust bearing for use as a tram and light rail coupling bearing.

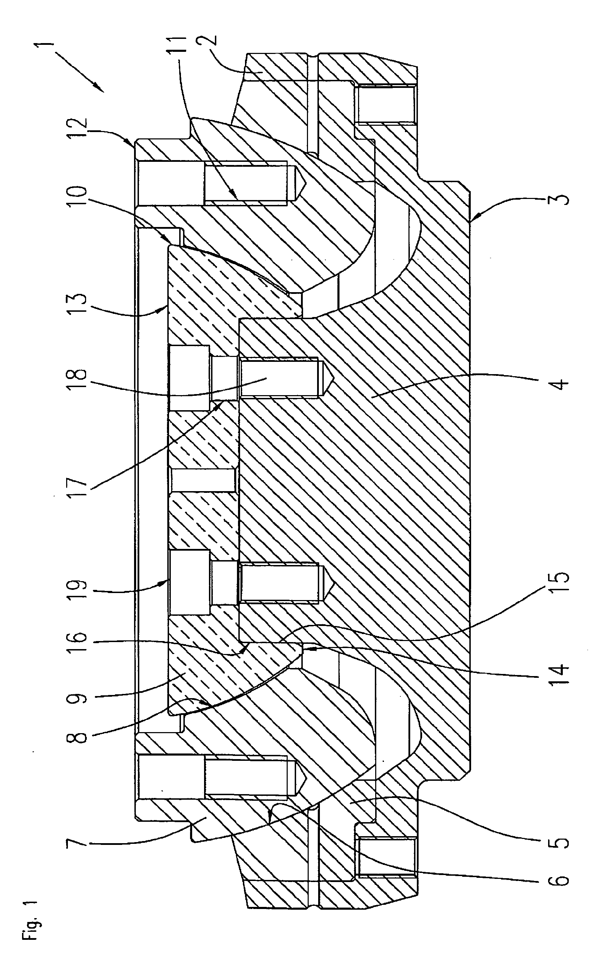

A conventional design for a thrust bearing (coupling bearing) for use in the coupling between a carriage and a bogie of a tram or similar light rail vehicle is shown in Figure 1 of the accompanying drawings. The upper part of the bearing is fixed to the carriage and the lower part of the bearing is fixed to the bogie under the carriage, allowing the bogie to rotate and pivot with respect to the carriage. This style of coupling bearing 1 comprises a generally cylindrical outer housing 2 having a circular base 3 having a central post 4 upstanding therefrom. The central post 4 is integrally formed with the base 3 of the housing 2. A spherical insert 5 is bonded to both the inside wall of the outer housing 2 and the top surface of the circular base 3. The spherical insert 5 presents a load-bearing surface in the form of a spherical bearing surface 6. Lubrication grooves may be provided to lubricate the load-bearing surface 6. The spherical insert 5 is manufactured from an engineering plastic.

An outer ball 7 is seated on the spherical insert 5, an outer spherical counterface of the outer ball 7 having substantially the same radius as the load-bearing surface 6 of the spherical insert 5. The outer ball 7 is rotatably mounted on the spherical insert 5 such that it can accommodate rolling and pitching movements with respect to the outer housing 2. The outer ball 7 is manufactured from steel.

The outer ball 7 has an inner spherical bearing surface 8. An inner ball 9 having a spherical bearing surface 10 is seated within the outer ball 7 on the inner bearing surface 8 of the outer ball 7, thereby sandwiching the outer ball 7 between the inner ball 9 and the spherical insert 5. The radius of the outer bearing surface 10 of the inner ball 9 substantially corresponds to the radius of the inner bearing surface 8 of the outer ball 7.

The outer ball 7 is provided with fixing holes 11 which are equi-spaced around the top surface 12 of the outer ball 7. The fixing holes 11 are provided to allow the outer ball 7 to be fixedly attached to the carriage of a tram or similar vehicle.

The inner ball 9 is formed generally as a truncated hemispheroid having two flat, substantially circular and parallel surfaces 13, 14. The inner ball 9 has a cylindrical recess 15 on the lower surface 14 in which a top cylindrical section 16 of the central post 4 is located. The outer ball 7 has a conical central aperture, through which the central post 4 protrudes, to be received by the cylindrical recess 15 of the inner ball 9.

Five equi-spaced bores 17 are provided in the inner ball 9 which align with five threaded holes 18 provided in the post 4. Locking screws 19 pass through the bores 17 in the inner ball 9 and are screwed into the threaded holes 18 in the post 4.

To secure the outer housing 2 of the bearing 1 to a bogie, access to the underside of the bogie is required, so that the bogie can be bolted to the underside of the base 3. It can be difficult to access the underside of a bogie "in the field" and thus the tram or light rail vehicle must be taken out of service and brought to a maintenance area having an inspection pit or other suitable provisions. Since such coupling bearings are often used in vehicles having low ground clearance, it is clearly undesirable to have to access the underside.

Still further, any fixing means (e.g. bolt) used to fix a bogie to the base 3 of the housing 2 has the potential to work loose or break, become detached from the arrangement and drop through the bogie on to the track. Furthermore, the loss of the fixing means from the assembly would mean that the bogie and bearing 1 become readily separated, an occurrence which is preferably avoided in a crash situation.

In use, wear occurs to the spherical insert 5 and the entire bearing housing 2, along with the adhered bearing insert 5, must then be removed from the vehicle and replaced. However, this requires undesirable access to the underside of the bearing, as discussed above.

W02008/017095 discloses the pre-characterising features of claim 1. US4986688 discloses a ball-and-socket joint.

It is an object of the present invention to provide a thrust bearing which overcome at least some of the disadvantages and problems associated with the bearing design discussed above.

Accordingly, the present invention provides a thrust bearing (1) comprising:
a housing (102) having a base (103), wherein a side wall is upstanding from the base (103); the housing (102) further comprising a concave spherical bearing surface (140);
an outer ball (107, 207, 307, 407) seated on and at least partially within the housing (102), having a spherical first insert (141, 241, 341) attached to the outer ball (107, 207, 307, 407), the spherical first insert (141, 241, 341) presenting a counterface in contact with the concave spherical bearing surface (140); and
an inner ball (109, 409, 509, 609), wherein the outer ball (107, 207, 307, 407) is sandwiched between the inner ball (109, 409, 509, 609) and the housing (102), characterised in that:
   the housing (102) further comprises a central post (104) upstanding from the base (103), the central post (104) being integrally formed with the housing (102);
   the inner ball (109, 409, 509, 609) is mounted on the central post (104); and
   a mounting arm (130) is formed integrally with the housing (102).

Preferably, the outer ball comprises a spherical outer surface, substantially conforming to the counterface of the first insert, the insert being of a substantially uniform thickness across the counterface.

Conveniently, the first insert is bonded to the outer ball.

Alternatively or additionally, the first insert is mechanically secured to the outer ball.

Advantageously, the first insert is releasably mechanically secured to the outer ball.

Preferably, the first insert is provided with a thread, and the outer ball is provided with a corresponding thread, the first insert being screwed onto the outer ball to secure the first insert to the outer ball.

Conveniently, the outer ball is an annulus having an at least partially threaded central aperture, the first insert being provided with a threaded hollow boss, which is screwed into the central aperture.

Advantageously, the inner surface of the boss comprises a chamfered surface.

Preferably, the first insert is provided with at least one countersunk hole, and the outer ball is provided with a corresponding number of threaded holes, and at least one respective locking screw is fastened in the or each hole to secure the first insert to the outer ball, the head(s) of the locking screw(s) residing in the countersunk hole(s).

Conveniently, the at least one recessed hole is provided on the counterface of the first insert.

Advantageously, the thrust bearing comprises a second insert provided between the inner ball and outer ball.

Preferably, the second insert is secured to an inner surface of the outer ball.

Conveniently, at least one of the first and second insert is either a self-lubricating or lubricated liner.

In order that the present invention may be more readily understood, embodiments thereof will now be described, by way of example, with reference to the accompanying drawings, in which:
FIGURE 1 is a cross-section through a conventional thrust bearing for use as a coupling bearing between a carriage and a bogie; and
FIGURE 2 shows a cross-section through a thrust bearing embodying the present invention;
FIGURE 3 shows an enlarged view of the thrust bearing of Figure 2;
FIGURE 3B shows an enlarged section of Figure 3A;
FIGURE 4 shows a schematic cross-section of part of another thrust bearing embodying the present invention;
FIGURE 5 shows a schematic cross-section of part of another thrust bearing embodying the present invention;
FIGURE 6A shows a cross-section of part of another thrust bearing embodying the present invention;
FIGURE 6B shows an enlarged section of Figure 6A; and
FIGURES 7A and 7B show a cross-section of part of another thrust bearing embodying the present invention.

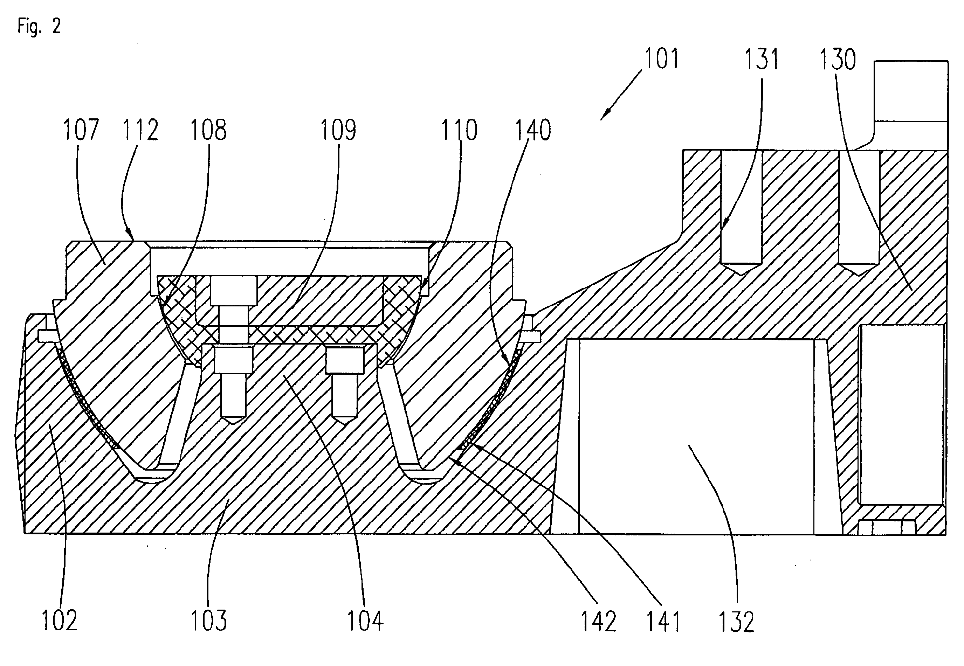

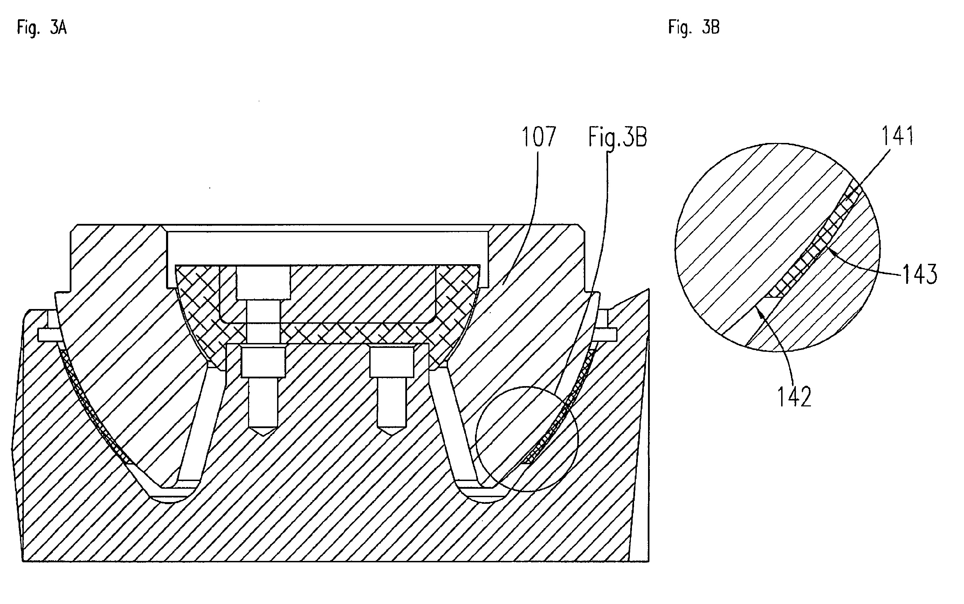

The thrust bearing 101 of Figures 2 and 3, embodying the present invention, comprises - in addition to the like-numbered features described above in relation to Figure 1 - a mounting arm 130 formed integrally with the bearing housing 102. The mounting arm 130 protrudes generally in a radially outwardly direction from the bearing housing 102. The mounting arm 130 comprises various fixing points 131 for fixing the thrust bearing 101 to a bogie of a vehicle. The mounting arm 130 shown in Figure 2 comprises at least one recess 132 on the underside of the mounting arm 130, to reduce the overall weight of the mounting arm 130. The at least one recess 132 may be defined by a number of strengthening webs provided in the underside of the mounting arm 130.

The thrust bearing 101 further provides a bearing housing 102 and base 103 substantially of the same general structure as the housing 2 and base 3 of the known thrust bearing 1 shown in Figure 1. In addition, the housing 102 of the thrust bearing 101 embodying the present invention provides a concave spherical bearing surface 140. The spherical bearing surface 140 may be seen as being dimensionally comparable to the bearing surface 6 of the insert 5 of the thrust bearing 1 in Figure 1. In contrast, however, the spherical bearing surface 140 is provided by the bearing housing 102 itself and not by a separate insert. The housing does not have a liner or insert. The bearing housing 102 of a thrust bearing 101 embodying the present invention is therefore a single, integral, item, with no sacrificial parts.

The outer ball 107 is provided with a spherical first insert 141 attached to a spherical outer surface 142 of the outer ball 107. The first insert 141 presents a counterface 143 in sliding contact with the bearing surface 140 of the bearing housing 102.

When significant wear has occurred on the first insert 141, the bearing 101 may be disassembled and the insert 141 and/or the outer ball 107 replaced as necessary. It will be appreciated that it is far simpler, and cheaper, to replace the outer ball 107 than it is to replace the entire bearing housing 102 (with integral mounting arms 130). Further, there is then no need to remove the entire thrust bearing 101 from the vehicle and replacement of the outer ball 107 may be performed in the field.

It will be noted that the first insert 141 is of substantially uniform thickness across its surface. As a result, the counterface 143 of the first insert 141 substantially conforms to the spherical outer surface 142 of the outer ball 107. The first insert 141 thus uses far less bearing material than the inert 5 of the thrust bearing 1 shown in Figure 1.

In the embodiment shown in Figures 2 and 3, the first insert 141 is bonded to the outer spherical surface 142 of the outer ball 107.

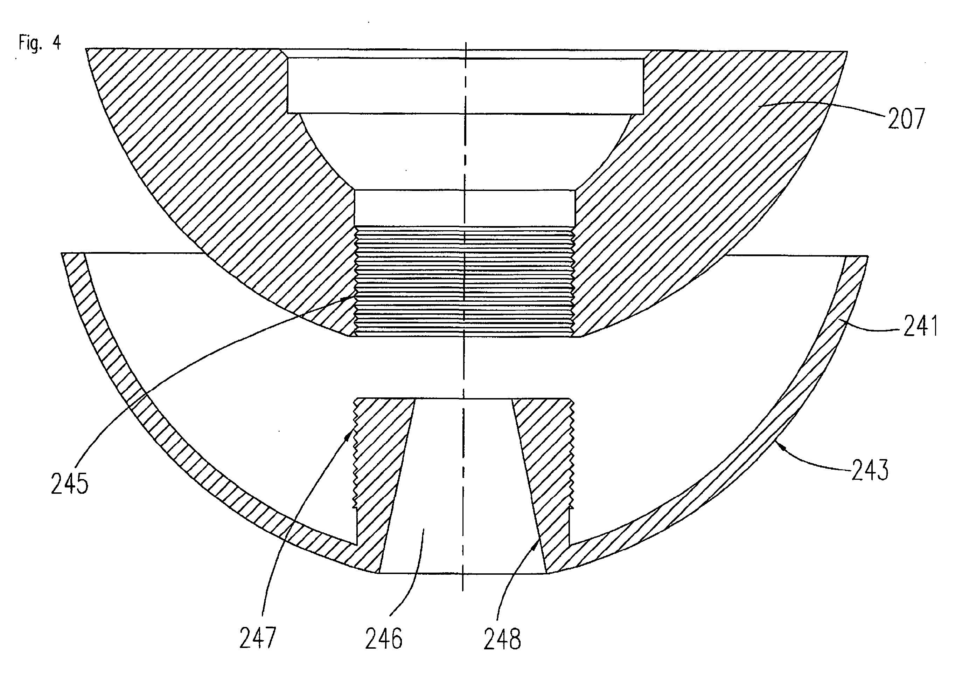

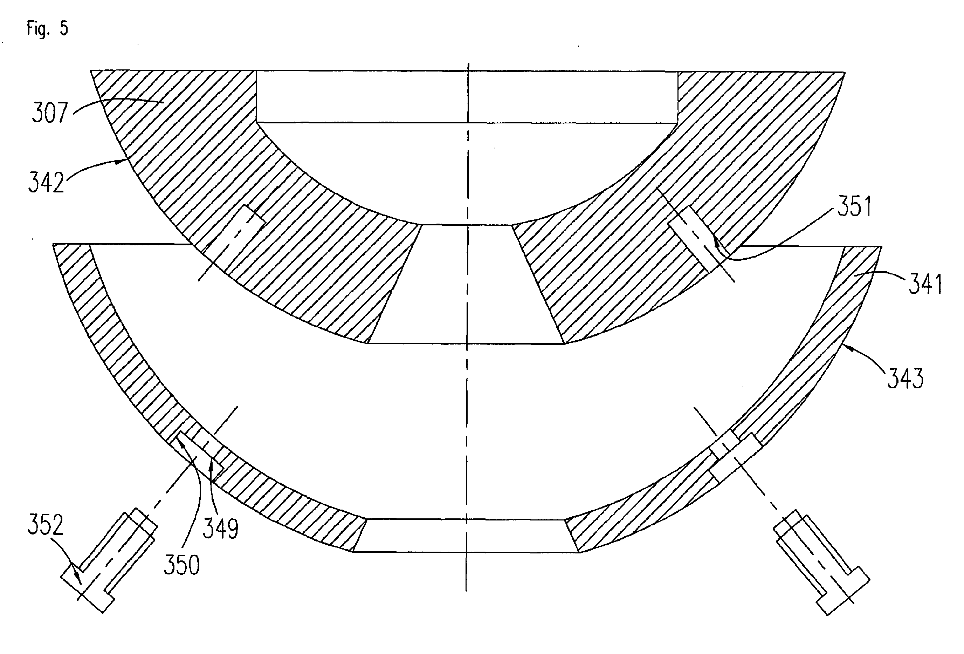

In other embodiments, shown in Figures 4 and 5, the first insert 141 is mechanically secured to the outer ball 107.

In the embodiment shown highly schematically in Figure 4, the outer ball 207 is an annulus having an at least partially threaded central aperture 245. The first insert 241 is provided with a hollow boss 246. The outer surface 247 of the boss 246 is threaded, permitting the boss 246 to be screwed into the central aperture 245 of the outer ball 207. The inner surface 248 of the boss 246 comprises a conical surface, corresponding in function and form to the inner conical surface of the aperture of the outer ball 107 shown in Figures 2 and 3. The diameter of the inner surface 248 of the boss 246 may the same as that of the aperture of the outer ball 107 of figures 2 and 3.

An alternative embodiment is shown highly schematically in Figure 5, wherein the first insert 341 is provided with at least one countersunk hole 349. A countersink recess 350 is provided co-axially with the hole 349 on the counterface 343. The outer ball 307 is provided with at least one respective threaded hole 351. The first insert 341 is attached to the outer ball 307 by securing a locking screw 352 through the hole 349 and into the threaded hole 351. The depth of the countersunk bore 350 is preferably more than the height of the head of the locking screw 352. As a result, when the locking screw 352 is secured in place, the screw head is recessed within the surface of the counterface 343 of the first insert 341. The first insert 341 is provided with a conical central aperture, the conical surface configured to correspond in function and form to the conical surface of the central aperture of the outer ball 307. The diameter of the conical central aperture may the same as that of the aperture of the outer ball 107 of figures 2 and 3.

It will readily be appreciated that the features shown in both Figures 4 and 5 may be combined, to provide added security and to ensure that the first insert does not become separated from the outer ball.

With conventional thrust bearings, such as that shown in Figure 1, the outer ball 7 is comprised of steel and the inner ball 9 is comprised of aluminium bronze. These materials have historically been chosen to facilitate pitch, swivel and rotational movement of the bearing surfaces. If the same material is used for both the inner and outer ball, galling will occur at the interface between the two balls.

Weight considerations play a major part in designing thrust bearings and it is desirable to use lightweight aerospace type materials, such as titanium. The use of titanium - which is softer than steel and aluminium bronze - for both the inner and outer balls, however, promotes galling, pick-up, friction etc.

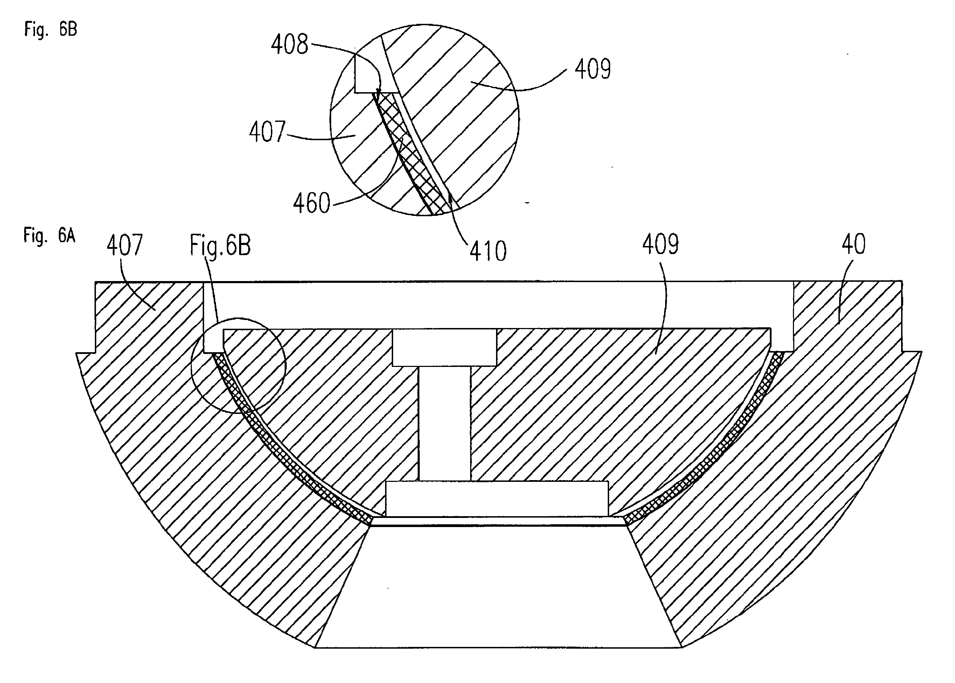

In one embodiment of the present invention, as shown in Figure 6, both the inner 409 and outer 407 ball are manufactured from Titanium or an alloy thereof. There is provided a second insert 460 between the inner ball 409 and outer ball 407. The second insert 460 is secured to the inner surface 408 of the outer ball 407. The second insert 460 may be bonded to or mechanically secured to the inner surface 408 of the outer ball 407 in the same or similar ways to those as described above.

Alternatively, the second insert 460 could be secured to the outer surface 410 of the inner ball 409. However, it is preferable to provide the second insert 460 attached to the inner surface 408 of the outer ball 407, along with the first insert attached to the outer surface of the outer ball, since the outer ball 407 may therefore easily be replaced when significant wear has developed on the surfaces of either or both the first and second inserts. The inner ball 409 may be configured such that replacement is seldom necessary.

Either or both of the first 141 and second inserts may be a self-lubricating liner, such as PTFE. The other, or both, of the first 141 and second insert may be a lubricated liner.

As described above, when significant wear has occurred on either or both of the first 141 and second 460 inserts, the outer ball 107 may be removed and replaced.

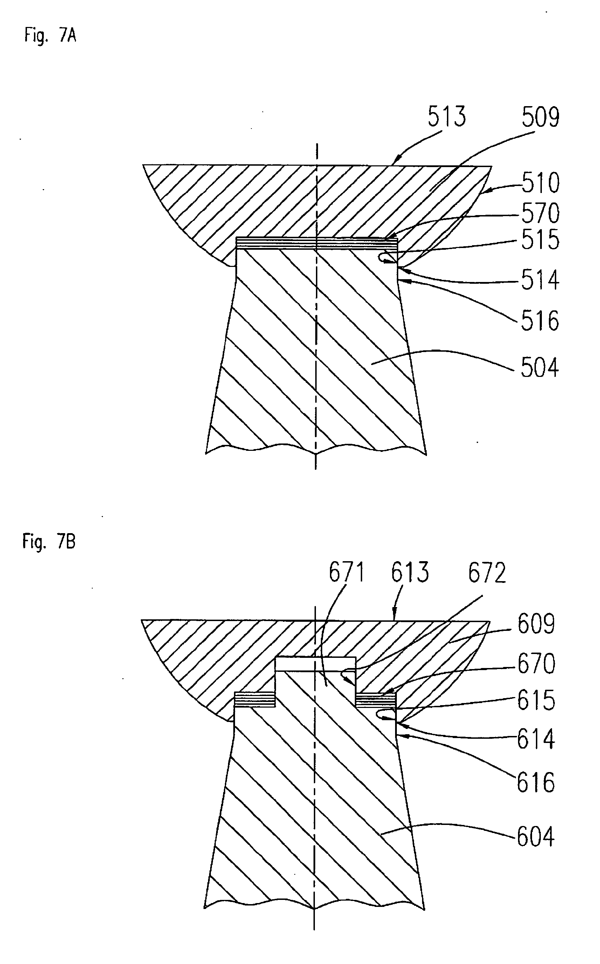

In a further embodiment of the present invention, a part of which is shown in figure 7A, the inner ball 509 is configured so as to be moveable with respect to the central post 504. More specifically, the surface of the cylindrical recess 515 of the inner ball 509 slides translatably with respect to the top cylindrical section 516 of the central post 504. Between the top of the central post 504 and the inner ball 509 is disposed at least one shim 570. Four shims 570 are shown in the example of figure 7A. By removing at least one or all of the shims 570, the position of the inner ball 509 with respect to the central post 504 may be altered according to the user's requirements. As a convenient consequence, the spherical bearing surface 510 of the inner ball 509 is moveable with respect to the spherical bearing surface 140 of the housing. The inner ball 509 is secured to the central post 504 using locking screws 19, (not shown) as in figures 2, 3 and 6.

It will be appreciated that to add or remove a shim 570, only the inner ball 509 needs to be removed. The outer ball 507 (not shown in figure 7A) may remain in place. Only minimal maintenance is therefore required.

In another embodiment, a part of which is shown in figure 7B, the arrangement is similar to that shown in figure 7A, but the central top portion of the post 604 is provided with a protruding cylindrical boss 671. The outer cylindrical surface of the boss 671 slides with respect to a cylindrical inner recess 672 of the inner ball 609. The shims 670 are ring-shaped, and are placed around the cylindrical boss 671. It will be noted that, by adding or removing the shims 670, the inner ball 609 may translate with respect to the post 604. A particular benefit of the arrangement shown in figure 7B, over 7A, is that it has improved radial stability. It will be noted that, at any one time, the cylindrical boss 671 engages with the cylindrical inner recess surface 672 of the inner ball 609. In addition, the cylindrical top section 616 of the central post 604 is always engaging with the cylindrical recess surface 615 of the inner ball 609.

It will be appreciated from figure 7B that smaller, disc-shaped shims 670 could alternatively, or additionally, be provided between the inner ball 609 and the cylindrical boss 671 of the post 604. The ring-shaped shim 670 shown in figure 7B may not therefore be required.

When used in this specification and claims, the terms "comprises" and "comprising" and variations thereof mean that the specified features, steps or integers are included. The terms are not to be interpreted to exclude the presence of other features, steps or components.

## Claims

1. A thrust bearing (1) comprising:
a housing (102) having a base (103), wherein a side wall is upstanding from the base (103); the housing (102) further comprising a concave spherical bearing surface (140);
an outer ball (107, 207, 307, 407) seated on and at least partially within the housing (102), having a spherical first insert (141, 241, 341) attached to the outer ball (107, 207, 307, 407), the spherical first insert (141, 241, 341) presenting a counterface in contact with the concave spherical bearing surface (140); and
an inner ball (109, 409, 509, 609), wherein the outer ball (107, 207, 307, 407) is sandwiched between the inner ball (109, 409, 509, 609) and the housing (102), **characterised in that**:
the housing (102) further comprises a central post (104) upstanding from the base (103), the central post (104) being integrally formed with the housing (102);
the inner ball (109, 409, 509, 609) is mounted on the central post (104); and
a mounting arm (130) is formed integrally with the housing (102).

2. A thrust bearing (1) according to claim 1, wherein the outer ball (107, 207, 307, 407) comprises a spherical outer surface (142), substantially conforming to the counterface of the first insert (141, 241, 341), the insert (141, 241, 341) being of a substantially uniform thickness across the counterface.

3. A thrust bearing (1) according to any preceding claim, wherein the first insert (141, 241, 341) is bonded to the outer ball, (107, 207, 307, 407).

4. A thrust bearing (1) according to one of the claims 1 to 2, wherein the first insert (141, 241, 341) is mechanically secured to the outer ball (107, 207, 307, 407).

5. A thrust bearing (1) according to claim 4, wherein the first insert (141) is releasably secured to the outer ball (107, 207, 307, 407).

6. A thrust bearing according to of claims 4 and 5, wherein the first insert (241) is provided with a thread (247), and the outer ball (207) is provided with a corresponding thread (245), the first insert (241) being screwed onto the outer ball (207) to secure the first insert (241) to the outer ball (207).

7. A thrust bearing (1) according to claim 6, wherein the outer ball (207) is an annulus having an at least partially threaded central aperture (245), the first insert (241) being provided with a threaded hollow boss (248), which is screwed into the central aperture (245).

8. A thrust bearing (1) according to claim 7, wherein the inner surface of the boss (248) comprises a chamfered surface.

9. A thrust bearing (1) according to one of the claims 4 to 8, wherein the first insert (341) is provided with at least one countersunk hole (349), and the outer ball (307) is provided with a corresponding number of threaded holes (351), and at least one respective locking screw (352) is fastened in the or each hole (351) to secure the first insert (341) to the outer ball (307), the head(s) of the locking screw(s) residing in the countersunk hole(s) (349).

10. A thrust bearing (1) according to claim 9, where the at least one countersunk hole (349) is provided on the counterface of the first insert (341).

11. A thrust bearing (1) according to any preceding claim, comprising a second insert (460) provided between the inner ball (409) and outer ball (407).

12. A thrust bearing (1) according to claim 11, wherein the second insert (460) is secured to an inner surface of the outer ball (407).

13. A thrust bearing (1) according to any preceding claim, wherein at least one of the first (341) and second insert (460) is either a self-lubricating or lubricated liner.

## Patentansprüche

1. Axiallager (1), umfassend:
ein Gehäuse (102) mit einer Basis (103), wobei eine Seitenwand von der Basis (103) aufrecht steht; wobei das Gehäuse (102) ferner eine konkave kugelförmige Lagerfläche (140) umfasst;
eine äußere Kugel (107, 207, 307, 407), die auf dem und teilweise in dem Gehäuse (102) sitzt, mit einem kugelförmigen ersten Einsatz (141, 241, 341), der an der äußeren Kugel (107, 207, 307, 407) angebracht ist, wobei der kugelförmige erste Einsatz (141, 241, 341) eine Gegenfläche in Kontakt mit der konkaven kugelförmigen Lagerfläche (140) aufweist; und
eine innere Kugel (109, 409, 509, 609), wobei die äußere Kugel (107, 207, 307, 407) sandwichartig zwischen die innere Kugel (109, 409, 509, 609) und dem Gehäuse (102) eingefügt ist, **dadurch gekennzeichnet, dass**:
das Gehäuse (102) ferner einen mittigen Stab (104) umfasst, der von der Basis (103) aufrecht steht, wobei der mittige Stab (104) einstückig mit dem Gehäuse (102) ausgebildet ist;
die innere Kugel (109, 409, 509, 609) am mittigen Stab (104) angebracht ist; und
ein Anbringungsarm (130) einstückig mit dem Gehäuse (102) ausgebildet ist.

2. Axiallager (1) nach Anspruch 1, wobei die äußere Kugel (107, 207, 307, 407) eine kugelförmige Außenfläche (142) hat, die im Wesentlichen der Gegenfläche des ersten Einsatzes (141, 241, 341) entspricht, wobei der Einsatz (141, 241, 341) über die Gegenfläche hinweg von im Wesentlichen gleichförmiger Dicke ist.

3. Axiallager (1) nach irgendeinem vorhergehenden Anspruch, wobei der erste Einsatz (141, 241, 341) an die äußere Kugel (107, 207, 307, 407) gebunden ist.

4. Axiallager (1) nach einem der Ansprüche 1 bis 2, wobei der erste Einsatz (141, 241, 341) mechanisch an der äußeren Kugel (107, 207, 307, 407) befestigt ist.

5. Axiallager (1) nach Anspruch 4, wobei der erste Einsatz (141) lösbar an der äußeren Kugel (107, 207, 307, 407) befestigt ist.

6. Axiallager (1) nach einem der Ansprüche 4 und 5, wobei der erste Einsatz (241) mit einem Gewinde (247) versehen ist und die äußere Kugel (207) mit einem entsprechenden Gewinde (245) versehen ist, wobei der erste Einsatz (241) auf die äußere Kugel (207) geschraubt wird, um den ersten Einsatz (241) an der äußeren Kugel (207) zu befestigen.

7. Axiallager (1) nach Anspruch 6, wobei die äußere Kugel (207) ein Außenrad mit einer zumindest teilweise mit Gewinde versehenen mittigen Öffnung (245) ist, wobei der erste Einsatz (241) mit einem hohlen Ansatz (248) mit Gewinde versehen ist, der in die mittige Öffnung (245) geschraubt ist.

8. Axiallager (1) nach Anspruch 7, wobei die Innenfläche des Ansatzes (248) eine abgefaste Fläche umfasst.

9. Axiallager (1) nach einem der Ansprüche 4 bis 8, wobei der erste Einsatz (341) mit zumindest einem angesenktem Loch (349) und die äußere Kugel (307) mit einer entsprechenden Anzahl von Löchern (351) mit Gewinde versehen ist und zumindest eine entsprechende Verriegelungsschraube (352) in dem oder jedem Loch (351) befestigt ist, um den ersten Einsatz (341) an der äußeren Kugel (307) zu befestigen, wobei sich der Kopf/die Köpfe der Verriegelungsschraube(n) in dem angesenkten Loch/den angesenkten Löchern (349) befindet/befinden.

10. Axiallager (1) nach Anspruch 9, wobei das zumindest eine angesenkte Loch (349) auf der Gegenfläche des ersten Einsatzes (341) vorgesehen ist.

11. Axiallager (1) nach irgendeinem vorhergehenden Anspruch, umfassend einen zweiten Einsatz (460), der zwischen der inneren Kugel (409) und der äußeren Kugel (407) vorgesehen ist.

12. Axiallager (1) nach Anspruch 11, wobei der zweite Einsatz (460) an einer Innenfläche der äußeren Kugel (407) befestigt ist.

13. Axiallager (1) nach irgendeinem vorhergehenden Anspruch, wobei der erste (341) und/oder der zweite Einsatz (460) entweder eine selbstschmierende oder eine geschmierte Auskleidung ist.

## Revendications

1. Palier de butée (1) comprenant :
un logement (102) muni d'une base (103), où une paroi latérale s'élève de la base (103) ; le logement (102) comprenant de plus une surface de palier sphérique concave (140) ;
une bille extérieure (107, 207, 307, 407) calée sur et en partie à l'intérieur du logement (102), munie d'un premier insert sphérique (141, 241, 341) attaché à la bille extérieure (107, 207, 307, 407), le premier insert sphérique (141, 241, 341) présentant une surface d'appui en contact avec la surface de palier sphérique concave (140) ; et
une bille intérieure (109, 409, 509, 609), où la bille extérieure (107, 207, 307, 407) est en sandwich entre la bille intérieure (109, 409, 509, 609) et le logement (102), **caractérisé par le fait que** :
le logement (102) comprend de plus un montant central (104) s'élevant depuis la base (103), le montant central (104) étant formé d'une seule pièce avec le logement (102) ;
la bille intérieure (109, 409, 509, 609) est montée sur le montant central (104) ; et
un bras support (130) est formé d'une seule pièce avec le logement (102).

2. Palier de butée (1) conforme à la revendication 1, où la bille extérieure (107, 207, 307, 407) comprend une surface extérieure sphérique (142), se conformant sensiblement à la surface d'appui du premier insert (141, 241, 341), l'insert (141, 241, 341) étant d'une épaisseur sensiblement uniforme sur la surface d'appui.

3. Palier de butée (1) conforme à une quelconque des revendications précédentes, où le premier insert (141, 241, 341) est lié à la bille extérieure (107, 207, 307, 407).

4. Palier de butée (1) conforme à une des revendications 1 à 2, où le premier insert (141, 241, 341) est fixé mécaniquement à la bille extérieure (107, 207, 307,407).

5. Palier de butée (1) conforme à la revendication 4, où le premier insert (141) est fixé de manière libérable à la bille extérieure (107, 207, 307, 407).

6. Palier de butée conforme à une des revendications 4 et 5, où le premier insert (241) est doté d'un filetage (247), et la bille extérieure (207) est dotée d'un filetage correspondant (245), le premier insert (241) étant vissé sur la bille extérieure (207) pour fixer le premier insert (241) à la bille extérieure (207).

7. Palier de butée (1) conforme à la revendication 6, où la bille extérieure (207) est un anneau doté d'une ouverture centrale au moins partiellement filetée (245), le premier insert (241) étant doté d'un bossage fileté creux (248), qui se visse dans l'ouverture centrale (245).

8. Palier de butée (1) conforme à la revendication 7, où la surface intérieure du bossage (248) comprend une surface chanfreinée.

9. Palier de butée (1) conforme à une des revendications 4 à 8, où le premier insert (341) est doté d'au moins un trou fraisé (349), et la bille extérieure (307) est dotée d'un nombre correspondant de trous filetés (351), et au moins une vis de blocage respective (352) est fixée dans le ou chaque trou (351) pour fixer le premier insert (341) à la bille extérieure (307), la ou les têtes de la ou des vis de blocage résidant dans le ou les trous fraisés (349).

10. Palier de butée (1) conforme à la revendication 9, où le au moins un trou fraisé (349) est prévu sur la surface d'appui du premier insert (341).

11. Palier de butée (1) conforme à une quelconque des revendications précédentes, comprenant un deuxième insert (460) prévu entre la bille intérieure (409) et la bille extérieure (407).

12. Palier de butée (1) conforme à la revendication 11, où le deuxième insert (460) est fixé à une surface intérieure de la bille extérieure (407).

13. Palier de butée (1) conforme à une quelconque des revendications précédentes, où au moins un du premier (341) et du deuxième insert (460) est une garniture soit autolubrifiante soit lubrifiée.
